# EUROPÄISCHE PATENTSCHRIFT

(11) **EP 3 067 402 B1**
(45) Veröffentlichungstag und Bekanntmachung des Hinweises auf die Patenterteilung: **26.04.2017**
(21) Anmeldenummer: 15158226.9
(22) Anmeldetag: 09.03.2015
(51) Int. Cl.: C09J 175/04

(54) **BINDEMITTELZUSAMMENSETZUNG UND DESSEN VERWENDUNG IN HOLZWERKSTOFFPLATTEN**
BINDER COMPOSITION AND USE OF SAME IN WOODEN BOARDS
COMPOSITION DE LIANT ET SON UTILISATION DANS DES PANNEAUX EN DÉRIVÉ DE BOIS

(43) Veröffentlichungstag der Anmeldung: 14.09.2016
(73) Patentinhaber: SWISS KRONO Tec AG, 6004 Luzern (CH)
(72) Erfinder: Dr. Gier, Andreas, 66399 Mandelbachtal (DE); Kalwa, Norbert, 32805 Horn-Bad Meinberg (DE)
(74) Vertreter: Maikowski & Ninnemann Patentanwälte Partnerschaft mbB

(56) Entgegenhaltungen:
- EP-B1- 2 447 332
- US-A1- 2003 096 110

## Beschreibung

Die vorliegende Erfindung betrifft eine Bindemittelzusammensetzung nach dem Oberbegriff des Anspruchs 1, dessen Verwendung nach Anspruch 11, ein Verfahren zu dessen Herstellung nach Anspruch 12, eine Holzwerkstoffplatte nach Anspruch 13 und ein Verfahren zur Herstellung der Holzwerkstoffplatte nach Anspruch 14.

### Beschreibung

Klebstoffe bzw. Bindemittel sind ein entscheidender Bestandteil bei der industriellen Fertigung von einer Vielzahl von Produkten, u.a. bei der Herstellung von Holzwerkstoffplatten. Hierbei werden Holzzerkleinerungsprodukte mit dem Bindemittel beleimt und unter Druck- und Temperaturanwendung zu Formkörpern wie z.B. Platten verpresst. Die Art und Menge des verwendeten Bindemittels wird dabei wesentlich von der Größe und Qualität der verwendeten Holzfasern und/oder Holzspäne beeinflusst.

Holzfasern werden typischerweise zur Herstellung von MDF- oder HDF-Platten in Verbindung mit Formaldehyd-Harzen, wie z.B. Melamin-Formaldehydharzen oder Harnstoff-Formaldehydharzen verwendet, wohingegen Holzspäne (Strands) zur Herstellung von OSB-Platten (oriented strand board) in Verbindung mit Polyurethan-Bindemitteln, z.B. auf PMDI-Basis zum Einsatz kommen.

Die ursprünglich bei der Furnier- und Sperrholzindustrie anfallenden strandförmigen Abfälle wurden zunächst in geringen Mengen zu OSB-Platten verarbeitet, die für die verschiedensten Anwendungen genutzt wurden. Sie werden heute vornehmlich im Holz- und Fertighausbaus eingesetzt, da OSB-Platten leicht sind und trotzdem die an Bauplatten gesetzten statischen Anforderungen erfüllen. So werden OSB-Platten als Bauplatten und als Wand- oder Dachbeplankung oder auch im Fußbodenbereich eingesetzt.

Die Herstellung der OSB-Platten erfolgt in einem mehrstufigen Prozess, wobei zunächst die Späne oder Strands aus entrindetem Rundholz, bevorzugt Nadelhölzer, in Längsrichtung durch rotierende Messer herausgeschnitten werden. Im sich anschließenden Trocknungsvorgang wird die natürliche Feuchtigkeit der Strands bei hohen Temperaturen reduziert. Der Feuchtigkeitsgrad der Strands kann je nach verwendeten Klebstoff variieren. So kann in Abhängigkeit vom Klebstoff eine Benetzung auf eher feuchten Strands oder auf trockenen Strands günstiger sein. Dabei ist eine Variation der Feuchte der Strands nur in einem geringen Maße möglich, so dass vornehmlich der Klebstoff an die vorhandene Feuchte angepasst werden muss. Außerdem sollte während des Pressvorganges möglichst wenig Feuchtigkeit in den Strands vorhanden sein, um den während des Pressvorganges entstehenden Dampfdruck weitestgehend zu reduzieren, da dieser die Rohplatte ansonsten zum Platzen bringen könnte.

Im Anschluss an die Trocknung der Strands werden diese in eine Beleimvorrichtung eingeführt, in welcher der Leim bzw. Klebstoff fein verteilt auf die Späne aufgebracht wird. Zur Verleimung werden überwiegend PMDI- (polymeres Diphenylmethandiisocyanat) oder MUPF-Leime (Melamin-Harnstoff-Phenol-Formaldehyd) eingesetzt. Die Leime werden bevorzugt in einzelnen Schichten aufgetragen. Die Leime können in den OSB-Platten aber auch gemischt eingesetzt werden. Diese Leime werden verwendet, da die OSB-Platten wie oben erwähnt häufig für konstruktive Anwendungen genutzt werden. Dort müssen feucht- bzw. nässebeständige Leime verwendet werden.

Nach der Beleimung werden die beleimten Strands in Streuapparaturen alternierend längs und quer zur Produktionsrichtung gestreut, so dass die Strands kreuzweise in mindestens drei Schichten angeordnet sind (Unterschicht - Mittelschicht - Deckschicht, wobei die Streurichtung von Unter- und Deckschicht gleich sind, jedoch von der Streurichtung der Mittelschicht abweichen).

Im Anschluss an die Streuung der Strands erfolgt ein kontinuierliches Verpressen der selbigen unter hohem Druck und hoher Temperatur bei z.B. 200 bis 250°C.

Wie nun Untersuchungen gezeigt haben, ist insbesondere bei der Beleimung (z.B. mit PMDI) von Strands aus Nadelhölzern ein Wegschlagen bzw. Diffundieren des Leimes in das Holz zu beobachten. Ein Grund hierfür ist, dass insbesondere der hydrophobe PMDI-Leim von der Holzoberfläche, die je nach Jahreszeit mehr oder weniger Fettsäuren enthält, absorbiert wird. Damit steht der Leim nur noch teilweise für die Verleimung der Strands in der Fläche zur Verfügung.

Insbesondere bei der Herstellung von OSB-Platten ist somit ein Mehraufwand an Leim- bzw. Klebstoffmengen notwendig, um das Wegschlagen bzw. die Absorption des verwendeten Leims in die Holzspäne bzw. Strands zu kompensieren. Dies führt zu erheblichen Mehrkosten. US2003/096110 offenbart eine Bindemittelzusammensetzung zur Verwendung in mehrschichtigen Erzeugnissen. Diese Zusammensetzung enthält ein Polyisocyanat als Härter-Komponente, ein Polyol als Binder-Komponente und ein Silanzusatzstoff, z.B. Glycidoxypropyltriethoxysilan.

Der vorliegenden Erfindung liegt somit die Aufgabe zugrunde, die angeführten Nachteile bei der Herstellung von OSB-Platten zu überwinden und ein Verfahren bereitzustellen, welches die Reduzierung verwendeten Leim- bzw. Klebstoffmengen ermöglicht.

Diese Aufgabe wird erfindungsgemäß durch eine Bindemittelzusammensetzung mit den Merkmalen des Anspruchs 1 und eine Holzwerkstoffplatte mit den Merkmalen des Anspruchs 13 gelöst.

Entsprechend wird eine Bindemittelzusammensetzung, insbesondere für Holzwerkstoffplatten, bereitgestellt, die herstellbar ist aus:
- mindestens einem Polymerklebstoff,
- mindestens einem vier-, fünf- oder sechswertigen Alditol oder einem höherwertigen Alkohol mit mehr als sechs Hydroxygruppen als einer polyalkoholischen Verbindung,
- mindestens einer Verbindung der allgemeinen Formel (I)

   **RaSiX₍₄₋ₐ₎** **(I),**

   oder der allgemeinen Formel (II)

   **O_{b}X_{c}(OH)_{d}RₑSiO(4-b-c-d-e)/2** **(II),**

   wobei
   - X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
   - R ein nicht-hydroliserbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, die durch -O- oder -NH- unterbrochen sein können, und
   - wobei R mindestens eine funktionelle Gruppe Q aufweisen kann, die ausgewählt ist aus einer Gruppe enthaltend eine Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,- Cyano-, Alkoxy,- Isocyanato-, Aldehyd-, Alkylcarbonyl-, Säureanhydrid- und/oder Phosphorsäuregruppe,
   - R und X jeweils gleich oder verschieden voneinander sein können, und
   - a = 0, 1, 2, 3, insbesondere 0 oder 1 ist,
   - b, c, d = 0 oder 1 sind, und
   - e = 1, 2, 3 ist.

Im Sinne der vorliegenden Anmeldung ist es für einen Fachmann ersichtlich, dass sich die silanhaltigen Verbindungen mit der allgemeinen Formel (II) unmittelbar als Hydrolyse- und/oder Kondensationsprodukte aus den Silan-Verbindungen der allgemeinen Formel (I) ableiten. Die Hydrolyse und/oder Kondensation der Verbindungen der allgemeinen Formel (I) wird durch die Reaktionsbedingungen, insbesondere durch saure Reaktionsbedingungen während der Bindemittelherstellung bedingt und beeinflusst.

Durch die erfindungsgemäße Kombination aus Silanverbindung und Polyalkohol entsteht zunächst eine Verbindung bzw. ein Reaktionsgemisch, welches aufgrund der Vielzahl an OH-Gruppen im Polyalkohol auf einer Molekülseite stark hydrophil ist. Andererseits verfügt das aus Silan und Polyalkohol hergestellte Molekül aufgrund des spezifisch modifizierten Silans über reaktive Gruppen, die mit dem Polymerklebstoff, wie z.B. PMDI-Leim, oder auch mit den OH-Gruppen des Holzes reagieren können. Diese neuen Verbindungen und die durch Kondensation mit dem Leim entstandenen Makromoleküle sind nunmehr aufgrund der hydrophilen Reste nicht mehr in der Lage, die hydrophobe Fettsäureschicht der Strands zu passieren. Dadurch bedingt verbleibt die vorliegende Bindemittelzusammensetzung auf der Oberfläche der Strands bzw. Fasern und diffundiert nicht in die Holzmatrix ein. Man kann auch sagen, dass der Polymerklebstoff nunmehr mit einem hydrophilen Anker ausgestattet ist.

Die polyalkoholische Verbindung ist ein vier-, fünf- oder sechswertiges Alditol oder ein höherwertiges Alkohol mit mehr als sechs Hydroxygruppen. Dabei können als vierwertige Alkohole Threit, Erythrit, Pentaerythrit, als fünfwertige Alkohole Arabit, Adonit, Xylit und als sechswertige Alkohole Sorbit, Mannit, Dulcit, Dipentaerythrit verwendet werden. Auch höherwertige Alkohole mit mehr als sechs Hydroxygruppen, wie z.B. sieben oder acht Hydroxygruppen und wie n-Polyglycole und n-Polyvinylalkohole können zum Einsatz kommen. Geeignete Polyglycole sind z.B. Polyethylen- oder Polypropylenglycole. Als besonders vorteilhaft hat sich die Verwendung von Sorbit erwiesen.

Die Menge der polyalkoholischen Verbindung in der Bindemittelzusammensetzung beträgt zwischen 5 bis 50 Gew%, bevorzugt 10 bis 30 Gew%, insbesondere bevorzugt 5 bis 10 Gew% bezogen auf die Gesamtmenge der Bindemittelzusammensetzung.

Der Rest X ist vorteilhafterweise ausgewählt aus einer Gruppe enthaltend Fluor, Chlor, Brom, Iod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugte hydrolysierbare Gruppen sind C₁₋₄ Alkoxygruppen, insbesondere Methoxy und Ethoxy.

Der nicht- hydrolysierbare R ist bevorzugt ausgewählt aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkinyl und substituiertes und nicht-substituiertes C₆-C₁₀-Aryl.

In einer Ausführungsform ist der nicht-hydrolysierbare Rest R ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

Unter dem Begriff "nicht-hydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH₂-Gruppe führt.

In einer Variante ist die mindestens eine funktionelle Gruppe Q ausgewählt aus einer Gruppe enthaltend Epoxid-, Hydroxy-, Ether-, Acryl-, Acryloxy-, Methacryl-, Methacryloxy-, Amino-, Alkoxy-, Cyano- und/oder Isocyano-Gruppe. Die mindestens eine funktionelle Gruppe Q, die im organischen nicht-hydrolysierbaren Rest R enthalten ist, umfasst in einer weiteren Variante vorteilhafterweise ein Epoxid-, insbesondere ein Glycidyl- oder Glycidyloxy-Gruppe, eine Alkoxy-, eine Amino- oder eine Isocyano-Gruppe.

Die funktionellen Gruppen, über die eine Vernetzung mit dem Polymerklebstoff und der Holzoberfläche möglich ist, umfassen insbesondere polymerisierbare und/oder polykondensierbare Gruppen, wobei unter der Polymerisationsreaktion auch Polyadditionsreaktionen zu verstehen sind. Die funktionellen Gruppen werden bevorzugt so ausgewählt, dass über gegebenenfalls katalysierte Polymerisations- und/oder Kondensationsreaktionen eine organische Vernetzung zwischen dem Polymerklebstoff und der Holzoberfläche und auch ggf. zwischen verschiedenen Klebstoffsystemen ausgeführt werden kann.

In einer besonders bevorzugten Ausführungsform werden als Silane Tetraethoxysilan, Methyltriethoxysilan, Gamma-Isocyanatopropyltriethoxysilan oder ein Glycidyloxypropyltriethoxysilan verwendet.

Wie beschrieben, kann der nicht-hydrolisierbare Rest R über mindestens eine funktionelle Gruppe Q verfügen. Darüber hinaus kann der Rest R auch mit weiteren Resten substituiert vorliegen.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet einen Rest der Formel R-C≡C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

In einer bevorzugten Ausführungsform weist die vorliegende Bindemittelzusammensetzung mindestens zwei Verbindungen der allgemeinen Formel (I) und/oder (II) auf.

So kann eine Bindemittelzusammensetzung verwendet werden, in der eine erste Verbindung der Formel **SiX₄** mit X OH oder Alkoxy, insbesondere Methoxy, Ethoxy, n-Propoxy oder i-Propoxy entspricht, und eine zweite Verbindung der Formel **RₐSiX₍₄₋ₐ₎** mit a= 1 oder 2 entspricht, wobei X OH oder Alkoxy, insbesondere Methoxy, Ethoxy, n-Propoxy oder i-Propoxy ist, R Methyl, Ethyl, n-Propyl oder n-Butyl ist und Q Glycidyl- oder Glycidyloxy-Gruppe, eine Alkoxy, eine Amin- oder eine Isocyano-Gruppe ist. Hierbei kann das Molverhältnis von erster und zweiter Verbindung 0,1 bis 1 mol, bevorzugt 0,1 bis 0,5 mol, insbesondere bevorzugt 0,1 bis 0,4 mol betragen.

In einer Ausführungsform der vorliegenden Bindemittelzusammensetzung wird bevorzugt ein Polymerklebstoff verwendet, der ausgewählt ist aus der Gruppe enthaltend Formaldehyd-Klebstoffe, Polyurethan-Klebstoffe, Epoxidharz-Klebstoffe, Polyester-Klebstoffe. Als Formaldehydkondensat-Klebstoff kann insbesondere ein Phenol-Formaldehydharz-Klebstoff (PF), ein Kresol-/ Resorcin-Formaldehydharz-Klebstoff, Harnstoff-Formaldehyd Harz-Klebstoff (UF) und/oder Melamin-Formaldehyd Harz Klebstoff (MF) verwendet werden.

Vorliegend ist die Verwendung eines Polyurethan-Klebstoffes bevorzugt, wobei der Polyurethan-Klebstoff auf der Basis von aromatischen Polyisocyanaten, insbesondere Polydiphenylmethandiisocyanat (PMDI), Toluylendiisocyanat (TDI) und/oder Diphenylmethandiisocyanat (MDI) vorliegt, wobei PMDI besonders bevorzugt ist.

In einer weiteren Ausführungsform des vorliegenden Verfahrens ist es ebenfalls möglich mehr als einen Polymerklebstoff zu verwenden. So können als erster Polymerklebstoff mindestens ein Polykondensationsklebstoff wie ein Polyamid-, ein Polyester-, ein Silikon- und/oder ein Formaldehydkondensat-Klebstoff, insbesondere ein Phenol-Formaldehydharz-Klebstoff (PF), ein Kresol-/ Resorcin-Formaldehydharz-Klebstoff, Harnstoff-Formaldehyd Harz-Klebstoff (UF) und/oder Melamin-Formaldehyd-Harz-Klebstoff (MF) verwendet werden, und als zweiter Polymerklebstoff mindestens ein Polyadditionsklebstoff wie ein Epoxidharz-, Polycyanurat- und/oder ein Polyurethan-Klebstoff, insbesondere ein Polyurethan-Klebstoff auf der Basis von Polydiphenylmethandiisocyanat (PMDI), verwendet werden. Derartige Hybridklebstoffsysteme sind aus der EP 2 447 332 B1 bekannt.

In einer weiteren Ausführungsform beträgt der Gehalt an Polymerklebstoff in vorliegend verwendeten Bindemittelzusammensetzung mindestens 95 Gew%, bevorzugt mindestens 80 Gew%, insbesondere bevorzugt mindestens 70 Gew%.

Dabei kann die Menge an Reaktionsmischung aus mindestens einer Silan-Verbindung der Formel (I) und/oder (II) und der mindestens einen polyalkoholischen Verbindung 1 bis 20 Gew%, bevorzugt 2 bis 15 Gew%, insbesondere bevorzugt 3 bis 10 Gew% bezogen auf die Menge an Polymerklebstoff betragen.

Der Lösemittelgehalt, der im Wesentlichen durch die Verwendung der Silane bedingt ist, liegt ebenfalls zwischen 1 bis 15 Gew%, bevorzugt 2 bis 13 Gew%, insbesondere bevorzugt zwischen 4 bis 10 Gew%. Bei diesen Angaben ist der Lösemittelgehalt aus dem eingesetzten Polymerklebstoff jedoch zunächst nicht berücksichtigt.

Eine besonders bevorzugte Variante der vorliegenden Bindemittelzusammensetzung umfasst Tetraethylorthosilikat, Glycidyloxypropyltriethoxysilan, Sorbitol und PMDI-Leim als Polymerklebstoff.

In einer weiteren Ausführungsform der vorliegenden Bindemittelzusammensetzung ist es möglich, der Zusammensetzung Nanopartikel zuzugeben. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Die Partikel können insbesondere von oxidischer, hydroxidischer oder oxihydroxidischer Natur sein, die über unterschiedliche Verfahren wie zum Beispiel Ionenaustauschprozess, Plasma-Prozess, Sol-Gel Verfahren, Vermahlung oder auch Flammabscheidung, hergestellt werden können. In einer bevorzugten Ausführungsform werden Partikel auf Basis von SiO₂, Al₂O₃, ZrO₂, TiO₂, SnO verwendet, wobei besonders bevorzugt nanoskalige SiO₂-Partikel in Form einer wässrigen Suspension (z.B. saure Suspension von SiO₂ stabilisiert mit Al³⁺ - oder Na⁺-Kationen) zum Einsatz kommen können.

Wie bereits oben erwähnt, kann die vorliegende Bindemittelzusammensetzung in der Herstellung von Holzspanplatten oder Holzfaserplatten, insbesondere OSB, HDF oder MDF-Platten, sowie Sperrholz und Brettschichtholz verwendet werden.

Die vorliegend verwendete Bindemittelzusammensetzung kann in einem Verfahren umfassend die folgenden Schritte hergestellt werden:
- Bereitstellen von mindestens einer, bevorzugt von mindestens zwei verschiedenen Verbindungen der allgemeinen Formeln (I) und/oder (II);
- Zugabe von mindestens einem vier-, fünf- oder sechswertigen Alditol oder einem höherwertigen Alkohol mit mehr als sechs Hydroxygruppen als einer polyalkoholischen Verbindung;
- Zugabe von mindestens einem Katalysator, insbesondere einer Säure, zu der Mischung aus mindestens einer Verbindung der Formel (I) und/oder (II) und mindestens einer polyalkoholischen Verbindung;
- Ausfällung und Abtrennung des Reaktionsgemisches aus mindestens einer Verbindung der Formel (I) und/oder (II) und mindestens einer polyalkoholischen Verbindung, und
- Zugabe von mindestens einem (ersten) Polymerklebstoff zu dem abgetrennten Reaktionsgemisch aus mindestens einer Verbindung der Formel (I) und/oder (II) und mindestens einer polyalkoholischen Verbindung.

In einem weiteren Schritt ist es ebenfalls möglich, einen weiteren zweiten Polymerklebstoff der Bindemittelzusammensetzung zuzugeben. Der zweite Polymerklebstoff unterscheidet sich bevorzugt von dem ersten Polymerklebstoff. Es ist zum Beispiel denkbar, als ersten Polymerklebstoff einen Polyurethan-Klebstoff wie z.B. PMDI zu verwenden und als einen zweiten Polymerklebstoff einen Formaldehydklebstoff wie ein Melamin-Formaldehydklebstoff einzusetzen.

Als Katalysator geeignete anorganische und/oder organische Säuren sind ausgewählt aus einer Gruppe enthaltend Phosphorsäure, Essigsäure, *p*-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

Zum Ausfällen des Reaktionsgemisches aus mindestens einer Verbindung der Formel (I) und/oder (II) und mindestens einer polyalkoholischen Verbindung hat sich als besonders geeignet die Verwendung von Natriumglycerophosphat erwiesen. Als weitere Ausfällungsmittel kommen auch Laugen wie NaOH, KOH, bzw. Ammoniumhydroxyd Lösungen in Betracht.

Bevorzugterweise wird das Ausfällungsmittel zusammen mit Wasser dem Reaktionsgemisches aus mindestens einer Verbindung der Formel (I) und/oder (II) und mindestens einer polyalkoholischen Verbindung zugegeben. Auf diese Weise wird das Reaktionsprodukt aus mindestens einer Verbindung der Formel (I) und/oder (II) und mindestens einer polyalkoholischen Verbindung in der wässrigen Phase konzentriert und von den Hydrolyseprodukten, wie z.B. Ethanol, abgetrennt.

In dem Fall, dass Nanopartikel der Bindemittelzusammensetzung zugemischt werden, werden die Partikel bevorzugt in einer Menge zwischen 0,1 bis 15 Gew%, bevorzugt 0,5 bis 10 Gew%, insbesondere bevorzugt zwischen 1 bis 5 Gew% in verwendet.

Die Temperaturen während des gesamten Herstellungsprozesses des Klebstoffsystems liegen üblicherweise in Bereichen zwischen 20 bis 80°C, bevorzugt zwischen 30 bis 60°C.

Die Aufgabe der vorliegenden Erfindung wird ebenfalls durch eine Holzwerkstoffplatte mit der vorliegenden Bindemittelzusammensetzung gelöst.

Entsprechend ist in mindestens einer Holzwerkstoffplatte, insbesondere eine Holzspanplatte und/oder Holzfaserplatte, wie z.B. einer OSB-, HDF- oder MDF-Platte, mindestens eine erfindungsgemäße Bindemittelzusammensetzung enthalten. Anzumerken ist, dass insbesondere die Verwendung der Klebstoffe PMDI und MUPF in der Deckschicht von OSB-Platten die technologischen Werte der Platten wie Querzug- und Biegefestigkeit verbessern und gleichzeitig die Quellung verringern.

Der Gehalt an Bindemittelzusammensetzung in der Holzwerkstoffplatte, insbesondere einer OSB-Holzwerkstoffplatte, beträgt zwischen 1,0 und 2,5 Gew%, bevorzugt 1,5 und 2,4 Gew%, insbesondere bevorzugt 1,7 und 2,2 Gew% bezogen auf die Gesamtmenge der Holzfasern bzw. Holzstrands. In einer Variante enthält die OSB-Holzwerkstoffplatte einen Polyurethan-Klebstoff oder einen Formaldehyd-Klebstoff als Polymerklebstoff.

Die vorliegende Holzwerkstoffplatte wird in einem Verfahren mit den folgenden Schritten hergestellt:
a) Herstellen von Hackschnitzeln oder Holzspänen (OSB-Strands) aus geeigneten Hölzern,
b) Zerspanen der Hackschnitzel zu Holzfasern,
c) ggf. Zwischenlagerung der Holzspäne oder Holzfasern, insbesondere in Silos oder Bunkern,
d) Trocknen der Holzspäne oder Holzfasern,
e) Sortieren bzw. Sichtung der Holzspäne oder Holzfasern entsprechend der Größe der Holzspäne oder Holzfasern,
f) ggf. weitere Zerkleinerung der Holzspäne oder Holzfasern und Zwischenlagerung,
g) Aufbringen der Holzspäne oder Holzfasern auf ein Transportband mittels Wind- und/oder Wurfsichtung, und
h) Verpressen der auf dem Transportband angeordneten Holzspäne oder Holzfasern, wobei die erfindungsgemäße Bindemittelzusammensetzung vor, während und/oder nach einem der Schritte b) bis h) zugegeben werden kann. Die Bindemittelzusammensetzung kann also zu jedem Zeitpunkt des Herstellungsverfahrens mit den Holzspänen oder Holzfasern vermischt werden. Es ist auch vorstellbar, dass der Klebstoff an mehreren Stellen auf die Holzspäne oder Holzfasern aufgetragen wird.

Zusätzlich zu den oben aufgeführten Verfahrensschritten werden die Hackschnitzel vor ihrer Zerkleinerung von Fremdstoffen z.B. im Rahmen einer Trockenreinigung oder Nassreinigung gereinigt.

In einer bevorzugten Ausführungsform wird die Bindemittelzusammensetzung auf die Holzspäne oder Holzfasern aufgesprüht. Die Menge der aufgetragenen Bindemittelzusammensetzung liegt zwischen 1 bis 2,5 Gew% bezogen auf die eingesetzte Menge an Spänen bzw. Fasern.

Im Falle der Herstellung von OSB-Platten können die verwendeten Holzstrands eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0, 3 und 1,5 mm, insbesondere bevorzugt zwischen 0, 4 und 1 mm aufweisen.

Mittels des erfindungsgemäßen Verfahrens ist es möglich Spanplatten oder Faserplatten, wie OSB-, MDF- oder HDF-Platten mit der erfindungsgemäßen Bindemittelzusammensetzung auszustatten.

Die Erfindung wird nachfolgend unter Bezugnahme auf die Figuren der Zeichnungen an einem Ausführungsbeispiel näher erläutert.

### Ausführungsbeispiel

Zu einer Mischung bestehend aus 20,33 g Tetraethylorthosilikat (0,1 mol) und 139,2 Glycidyloxypropyltriethoxysilan (0,5 mol) wird unter Rühren eine Mischung aus 34,2 g Sorbitol (50 Gew % in dem. Wasser) und 4 g para-Toluolsulfonsäure gegeben. Hierbei erfolgen eine Hydrolyse der Silanmischung und eine Reaktion mit dem Sorbit, wobei der Kondensationsgrad bewusst niedrig gehalten wird. Der Reaktionsverlauf und der Kondensationsgrad werden mittels Si-NMR-Messungen verfolgt..

Nach einer Rührzeit von 4 Stunden wird eine Mischung aus 136,8 g demin. Wasser und 34 g Natriumgylcerophopshat dem obigen Reaktionsgemisch zugegeben. Diese Mischung wird weitere 60 Minuten gerührt.

Nach einer Ruhezeit von ca. 1 Stunde bildet sich ein zweiphasiges Gemisch. Die untere nun wässrige Phase enthaltend das Reaktionsprodukt aus Silanen und Sorbit wird von der oberen Alkoholphase getrennt.

Zu 428 g PMDI Leim wird die wässrige Binderphase enthaltend das Reaktionsprodukt aus Silanen und Sorbit gegeben. Diese Mischung muss homogen sein. Die wässrige Binderphase wird in den Konzentrationen 5 Gew. % und 20 Gew. % zum PMDI als Bindemittel zugegeben.

Anschließend wird die Bindemittelzusammensetzung auf ein Spanplattenmuster bzw. eine Spanplattenprobe aufgetragen. Auf eine Schnittfläche der Holzprobe wurde jeweils 1 ml der Lösung gegeben und im Trockenschrank bei 100 °C für 15 Minuten getrocknet. Anschließend wurde die Eindringtiefe der Lösung visuell ermittelt. Pro Versuch wurden je 5 Holzmuster getestet.

### Ergebnisse:

Reiner PMDI Leim zieht bei dieser Methode (Härtung bei 100°C für 15 min) weit in das Spanplattenprobe ein und geht somit an der Klebefläche verloren. Dabei sinkt der PMDI-Leim sehr weit in die Spanplattenprobe ein, was sowohl auf der Vorder- als auch auf der Rückseite der Spanplattenprobe zu erkennen.

Hingegen ergibt sich bei der Zugabe von 5 Gew% an Reaktionsprodukt aus Silanen und Sorbit zum PMDI-Leim nach Härtung bei 100°C für 15 min ein anderes Ergebnis. So sind sowohl auf der Vorder- wie auf der Rückseite keinerlei Eindringspuren des modifizierter Leims zu erkennen. Bei Erhöhung des Gehaltes an Reaktionsprodukt aus Silanen und Sorbit auf 20 Gew% und Härtung bei 100°C für 15 min verbleibt der Leim sogar komplett auf der Oberfläche und scheint leicht aufzuschäumen.

Die Ergebnisse belegen eindeutig, dass durch Zugabe eines Reaktionsgemisches aus modifizierten Silanen mit einem Polyalkohol wie z.B. Sorbit zu einem PMDI-Leim eine Absorption bzw. Diffusion des PMDI-Leims in die Holzfasern verhindert werden kann, wodurch eine Verringerung der notwendigen Bindemittelmenge im Herstellungsverfahren von Holzwerkstoffplatten möglich wird.

## Patentansprüche

1. Bindemittelzusammensetzung, insbesondere für Holzwerkstoffplatten, herstellbar aus
- mindestens einem Polymerklebstoff,
- mindestens einem vier-, fünf- oder sechswertigen Alditol oder einem höherwertigen Alkohol mit mehr als sechs Hydroxygruppen als einer polyalkoholischen Verbindung,
- mindestens einer Verbindung der allgemeinen Formel (I)
**RₐSiX₍₄₋ₐ₎** **(I)**,
oder der allgemeinen Formel **(II)**
**O_{b}X_{c}(OH)_{d}RₑSiO(4-b-c-d-e)/2** **(II),**
wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, die durch -O- oder -NH- unterbrochen sein können, und
- wobei R mindestens eine funktionelle Gruppe Q aufweisen kann, die ausgewählt ist aus einer Gruppe enthaltend eine Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,- Cyano-, Alkoxy,- Isocyanato-, Aldehyd-, Alkylcarbonyl-, Säureanhydrid- und/oder Phosphorsäuregruppe,
- R und X jeweils gleich oder verschieden voneinander sein können, und
- a = 0, 1, 2, 3, insbesondere 0 oder 1 ist,
- b, c, d = 0 oder 1 sind, und
- e = 1, 2, 3 ist.

2. Bindemittelzusammensetzung nach Anspruch 1, **dadurch gekennzeichnet, dass** als das mindestens eine Alditol die vierwertigen Alkohole Threit, Erythrit, die fünfwertigen Alkohole Arabit, Adonit, Xylit und die sechswertigen Alkohole Sorbit, Mannit, Dulcit verwendet werden.

3. Bindemittelzusammensetzung nach einem der vorhergehenden Ansprüche, **dadurch gekennzeichnet, dass** X ausgewählt ist aus einer Gruppe enthaltend Fluor, Chlor, Brom, Iod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆.

4. Bindemittelzusammensetzung nach einem der vorhergehenden Ansprüche, **dadurch gekennzeichnet, dass** R ausgewählt ist aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkinyl und substituiertes und nicht-substituiertes C₆-C₁₀-Aryl.

5. Bindemittelzusammensetzung nach einem der vorhergehenden Ansprüche **dadurch gekennzeichnet, dass** R ausgewählt ist aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

6. Bindemittelzusammensetzung nach einem der vorhergehenden Ansprüche, **dadurch gekennzeichnet, dass** die mindestens eine funktionelle Gruppe Q ausgewählt ist aus einer Gruppe enthaltend Epoxid-, Hydroxy-, Ether-, Acryl-, Acryloxy-, Methacryl-, Methacryloxy-, Amino-, Alkoxy-, Cyano- und/oder Isocyano-Gruppe.

7. Bindemittelzusammensetzung nach einem der vorhergehenden Ansprüche, **dadurch gekennzeichnet, dass** die mindestens eine funktionelle Gruppe Q ein Epoxid-, insbesondere eine Glycidyl- oder Glycidyloxy-Gruppe, eine Alkoxy, eine Amin- oder eine Isocyano-Gruppe ist.

8. Bindemittelzusammensetzung nach einem der vorhergehenden Ansprüche, **dadurch gekennzeichnet, dass** mindestens zwei Verbindungen der allgemeinen Formel (I) und/oder (II) verwendet werden.

9. Bindemittelzusammensetzung nach einem der vorhergehenden Ansprüche, **dadurch gekennzeichnet, dass** der Polymerklebstoff ausgewählt ist aus der Gruppe enthaltend Formaldehyd-Klebstoffe, Polyurethan-Klebstoffe, Epoxidharz-Klebstoffe, Polyester-Klebstoffe.

10. Bindemittelzusammensetzung nach einem der vorhergehenden Ansprüche, **dadurch gekennzeichnet, dass** als Polymerklebstoff ein Polyurethan-Klebstoff auf der Basis von Polydiphenylmethandiisocyanat (PMDI) ist.

11. Verwendung einer Bindemittelzusammensetzung nach einem der vorhergehenden Ansprüche in der Herstellung von Holzspanplatten oder Holzfaserplatten, insbesondere OSB, HDF oder MDF-Platten, sowie Sperrholz und Brettschichtholz.

12. Verfahren zur Herstellung einer Bindemittelzusammensetzung nach einem der Ansprüche 1 bis 10 umfassend die Schritte:
- Bereitstellen von mindestens einer, bevorzugt von mindestens zwei verschiedenen Verbindungen der allgemeinen Formeln (I) und/oder (II);
- Zugabe von mindestens einem vier-, fünf- oder sechswertigen Alditol oder einem höherwertigen Alkohol mit mehr als sechs Hydroxygruppen als polyalkoholischer Verbindung;
- Zugabe von mindestens einem Katalysator, insbesondere einer Säure, zu der Mischung aus mindestens einer Verbindung der Formel (I) und/oder (II) und mindestens einer polyalkoholischen Verbindung;
- Ausfällung und Abtrennung des Reaktionsgemisches aus mindestens einer Verbindung der Formel (I) und/oder (II) und mindestens einer polyalkoholischen Verbindung, und
- Zugabe von mindestens einem Polymerklebstoffsystems zu dem abgetrennten Reaktionsgemisch aus mindestens einer Verbindung der Formel (I) und/oder (II) und mindestens einer polyalkoholischen Verbindung.

13. Holzwerkstoffplatte, insbesondere eine Holzspanplatte und/oder Holzfaserplatte, umfassend mindestens eine Bindemittelzusammensetzung nach einem der Ansprüche 1 bis 10.

14. Verfahren zur Herstellung einer Holzwerkstoffplatte nach Anspruch 13 umfassend die Schritte:
a) Herstellen von Hackschnitzeln oder Holzspänen (OSB-Strands) aus geeigneten Hölzern,
b) Zerspanen der Hackschnitzel Holzfasern,
c) ggf. Zwischenlagerung der Holzspäne oder Holzfasern, insbesondere in Silos oder Bunkern,
d) Trocknen der Holzspäne oder Holzfasern,
e) Sortieren bzw. Sichtung der Holzspäne oder Holzfasern entsprechend der Größe der Holzspäne oder Holzfasern,
f) ggf. weitere Zerkleinerung der Holzspäne oder Holzfasern und Zwischenlagerung,
g) Aufbringen der Holzspäne oder Holzfasern auf ein Transportband mittels Wind- und/oder Wurfsichtung, und
h) Verpressen der auf dem Transportband angeordneten Holzspäne oder Holzfasern,
**dadurch gekennzeichnet, dass**
mindestens eine Bindemittelzusammensetzung nach einem der Ansprüche 1 bis 10 vor, während und/oder nach einem der Schritte b) bis h) zugegeben werden kann.

## Claims

1. Binder composition, in particular for wooden composite boards obtainable from
- at least one polymer adhesive,
- at least one tetravalent, pentavalent or hexavalent alditol or a higher valent alcohol with more than six hydroxyl groups as a polyalcohol compound,
- at least one compound of the general formula (I)
**RₐSiX₍₄₋ₐ₎** **(I),**
or the general formula (II)
**O_{b}X_{c}(OH)_{d}RₑSiO(4-b-c-d-e)/2** **(II),**
wherein
- X is H, OH or a hydrolysable moiety selected from the group comprising halogen, alkoxy, carboxyl, amino, monoalkylamino or dialkylamino, aryloxy, acyloxy, alkylcarbonyl,
- R is a non-hydrolysable organic moiety R selected from the group comprising substituted and unsubstituted akyl, substituted and unsubstituted aryl, substituted and unsubstituted alkenyl, substituted and unsubstituted alkinyl, substituted and unsubstituted cycloalkyl, which may be interrupted by -O- or - NH-, and
- wherein R has at least one functional group Q selected from a group comprising an epoxide, hydroxyl, ether, amino, monoalkylamino, dialkylamino, substituted and unsubstituted aniline, amide, carboxyl, alkinyl, acryl, acryloxy, methacryl, methacryloxy, mercapto, cyano, alkoxy, isocyanate, aldehyde, alkylcarbonyl, acid anhydride and/or phosphoric acid group, and
- R and X can be in each case the same or different from each other, and
- a = 0, 1, 2, 3, in particular 0 or 1,
- b, c, d = 0 or 1, and
- e = 1, 2, 3.

2. Binder composition according to claim 1, **characterized in that** the tetravalent alcohols threit, erythrit, the pentavalent alcohols arabit, adonit, xylit and the hexavalent alcohols sorbit, mannit, dulcet are used as the at least one alditol.

3. Binder composition according to one of the preceding claims, **characterized in that** X is selected from a group comprising fluorine, chlorine, bromine, iodine, C₁₋₆-alkoxy, in particular methoxy, ethoxy, n-propoxy and butoxy, C₆₋₁₀-aryloxy, in particular phenoxy, C₂₋₇-acyloxy, in particular acetoxy or propionoxy, C₂₋₇-alkylcarbonyl, in particular acetyl, monoalkylamino or dialkylamino with C₁ to C₁₂, in particular C₁ to C₆.

4. Binder composition according to one of the preceding claims, **characterized in that** R is selected from a group comprising substituted and unsubstituted C₁-C₃₀-alkyl, in particular C₅-C₂₅-alkyl, substituted and unsubstituted C₂-C₆-alkenyl, substituted and unsubstituted C₂-C₆-alkinyl and substituted and unsubstituted C₆-C₁₀-aryl.

5. Binder composition according to one of the preceding claims, **characterized in that** R is selected from a group comprising methyl, ethyl, n-propyl, isopropyl, n-butyl, s-butyl, t-butyl, pentyl, hexyl, cyclohexyl, vinyl, 1-propenyl, 2-propenyl, butenyl, acetylenyl, propargyl, phenyl and naphthyl.

6. Binder composition according to one of the preceding claims, **characterized in that** the at least one functional group Q selected from a group comprising an epoxide, hydroxyl, ether, acryl, acryloxy, methacryl, methacryloxy, amino, alkoxy, cyano and/or isocyano group.

7. Binder composition according to one of the preceding claims, **characterized in that** the at least one functional group Q is an epoxide, in particular a glycidyl or glycidyloxy group, an alkoxy, an amino or an isocyano group.

8. Binder composition according to one of the preceding claims, **characterized in that** at least two compounds of the general formula (I) and/or (II) are used.

9. Binder composition according to one of the preceding claims, **characterized in that** the polymer adhesive is selected from a group comprising formaldehyde adhesive, polyurethane adhesive, epoxide resin adhesive, polyester adhesives.

10. Binder composition according to one of the preceding claims, **characterized in that** the polymer adhesive is a polyurethane adhesive on the basis of polydiphenyl methane diisocyanate (PMDI).

11. Use of a binder composition according to one of the preceding claims in the production of wood chip boards or wood fiber boards, in particular OSB, HDF or MDF boards as well as plywood and laminated timber.

12. Method for obtaining a binder composition according to one of the claims 1 to 10 comprising the steps:
- providing at least one, preferably at least two different compounds of the general formula (I) and/or (II);
- addition of at least one tetravalent, pentavalent or hexavalent alditol or a higher valent alcohol with more than six hydroxyl groups as a polyalcohol compound;
- addition of at least one catalyst, in particular an acid, to the mixture of at least one compound of formula (I) and/or (II) and at least one polyalcohol compound;
- precipitation and separation of the reaction mixture of at least one compound of the formula (I) and/or (II) and at least one polyalcohol compound, and
- addition of at least one polymer adhesive system to the separated reaction mixture of at least one compound of formula (I) and/or (II) and at least one polyalcohol compound.

13. Wooden composite board, in particular a wood chip board and/or wood fiber board, comprising at least one binder composition according to one of the claims 1 to 10.

14. Method for the production of a wooden composite board according to claim 13 comprising the steps:
a) producing wood chips or wood strands (OSB strands) from suitable timber,
b) chipping the wood chips to wood fibers,
c) possibly a temporary storage of the wood particles or wood fibers, in particular in silos or bunkers,
d) drying the wood particles or wood fibers,
e) sorting or classifying the wood particles or wood fibers corresponding to the size of the wood particles or wood fibers,
f) possibly further comminution of the wood particles or wood fibers and intermediate storage,
g) applying the wood particles or wood fibers onto a transport belt by means of pneumatic and/or spreader classification, and
h) compressing the wood particles or wood fibers arranged on the transport belt,
**characterized in that**
at least one binder composition according to one of the claims 1 to 10 can be added before, during and/or after any of the steps b) to h).

## Revendications

1. Composition de liant, en particulier pour panneaux à base de dérivés de bois, pouvant être préparée à partir
- d'au moins un adhésif polymère,
- d'au moins un alditol tétra- penta- ou hexahydrique ou d'un alcool à plus grand nombre de fonctions hydroxyle, comportant plus de six groupes hydroxy, en tant que composé polyalcoolique,
- d'au moins un composé de formule générale (I)
**RₐSiX₍₄₋ₐ₎** **(I),**
ou de formule générale (II)
**O_{b}X_{c}(OH)_{d}RₑSiO(4-b-c-d-e)/2** **(II),**
où
- X est H, OH ou un radical hydrolysable choisi dans le groupe comprenant un atome d'halogène, des groupes alcoxy, carboxy, amino, monoalkylamino ou dialkylamino, aryloxy, acyloxy, alkylcarbonyle,
- R est un radical organique non hydrolysable choisi dans le groupe comprenant des groupes alkyle substitué et alkyle non substitué, aryle substitué et aryle non substitué, alcényle substitué et alcényle non substitué, alcynyle substitué et alcynyle non substitué, cycloalkyle substitué et cycloalkyle non substitué, qui peuvent être interrompus par -O- ou -NH-, et
- R pouvant comporter au moins un groupe fonctionnel Q, qui est choisi dans le groupe contenant un groupe époxyde, hydroxy, éther, amino, monoalkylamino, dialkylamino, anilino substitué et anilino non substitué, amido, carboxy, alcynyle, acryloyle, acryloxy, méthacryloyle, méthacryloxy, mercapto, cyano, alcoxy, isocyanato, aldéhyde, alkylcarbonyle, anhydride d'acide et/ou phosphoryle,
- R et X peuvent être identiques ou différents l'un de l'autre, et
- a est égal à 0, 1, 2, 3, en particulier 0 ou 1,
- b, c, d valent 0 ou 1, et
- e est égal à 1, 2, 3.

2. Composition de liant selon la revendication 1, **caractérisée en ce qu'**on utilise en tant que ledit au moins un alditol les alcools tétrahydriques thréitol, érythritol, les alcools pentahydriques arabitol, adonitol, xylitol et les alcools hexahydriques sorbitol, mannitol, dulcitol.

3. Composition de liant selon l'une quelconque des revendications précédentes, **caractérisée en ce que** X est choisi dans un groupe contenant les atomes de fluor, de chlore, de brome, d'iode, des groupes alcoxy en C₁-C₆, en particulier méthoxy, éthoxy, n-propoxy et butoxy, aryloxy en C₆-C₁₀, en particulier phénoxy, acyloxy en C₂-C₇, en particulier acétoxy ou propionoxy, alkylcarbonyle en C₂-C₇, en particulier acétyle, monoalkylamino ou dialkylamino en C₁-C₁₂, en particulier en C₁-C₆.

4. Composition de liant selon l'une quelconque des revendications précédentes, **caractérisée en ce que** R est choisi dans le groupe comprenant un groupe alkyle en C₁-C₃₀, en particulier alkyle en C₅-C₂₅, substitué et alkyle en C₁-C₃₀, en particulier alkyle en C₅-C₂₅ non substitué, alcényle en C₂-C₆ substitué et alcényle en C₂-C₆ non substitué, alcynyle en C₂-C₆ substitué et alcynyle en C₂-C₆ non substitué et aryle en C₆-C₁₀ substitué et aryle en C₆-C₁₀ non substitué.

5. Composition de liant selon l'une quelconque des revendications précédentes, **caractérisée en ce que** R est choisi dans le groupe contenant les groupes méthyle, éthyle, n-propyle, isopropyle, n-butyle, sec-butyle, tert-butyle, pentyle, hexyle, cyclohexyle, vinyle, 1-propényle, 2-propényle, butényle, acétylényle, propargyle, phényle et naphtyle.

6. Composition de liant selon l'une quelconque des revendications précédentes, **caractérisée en ce que** ledit au moins un groupe fonctionnel Q est choisi dans un groupe contenant les groupes époxyde, hydroxy, éther, acryloyle, acryloxy, méthacryloyle, méthacryloxy, amino, alcoxy, cyano et/ou isocyano.

7. Composition de liant selon l'une quelconque des revendications précédentes, **caractérisée en ce que** ledit au moins un groupe fonctionnel Q est un groupe époxyde, en particulier un groupe glycidyle ou glycidyloxy, un groupe alcoxy, un groupe amino ou un groupe isocyano.

8. Composition de liant selon l'une quelconque des revendications précédentes, **caractérisée en ce qu'**on utilise au moins deux composés de formule générale (I) et/ou de formule générale (II).

9. Composition de liant selon l'une quelconque des revendications précédentes, **caractérisée en ce que** l'adhésif polymère est choisi dans le groupe contenant des adhésifs formaldéhyde, des adhésifs polyuréthane, des adhésifs résine époxy, des adhésifs polyester.

10. Composition de liant selon l'une quelconque des revendications précédentes, **caractérisée en ce qu'**en tant qu'adhésif polymère un adhésif polyuréthane est à base de polydiphénylméthane-diisocyanate (PMDI).

11. Utilisation d'une composition de liant selon l'une quelconque des revendications précédentes, dans la fabrication de panneaux de particules de bois ou de panneaux de fibres de bois, en particulier de panneaux OSB, HDF ou MDF, ainsi que de bois stratifié et de bois lamellé-collé.

12. Procédé pour la préparation d'une composition de liant selon l'une quelconque des revendications 1 à 10, comprenant les étapes :
- disposition d'au moins un, de préférence d'au moins deux composés différents de formules générales (I) et/ou (II) ;
- addition d'au moins un alditol tétra-, penta- ou hexahydrique ou d'un alcool à plus grand nombre de fonctions hydroxyle, comportant plus de six groupes hydroxy, en tant que composé polyalcoolique ;
- addition d'au moins un catalyseur, en particulier d'un acide, au mélange d'au moins un composé de formule (I) et/ou de formule (II) et d'au moins un composé polyalcoolique ;
- précipitation et séparation du mélange réactionnel d'au moins un composé de formule (I) et/ou de formule (II) et d'au moins un composé polyalcoolique, et
- addition d'au moins un système d'adhésif polymère au mélange réactionnel séparé d'au moins un composé de formule (I) et/ou de formule (II) et d'au moins un composé polyalcoolique.

13. Panneau de matériau à base de bois, en particulier panneau de particules de bois et/ou panneau de fibres de bois, comprenant au moins une composition de liant selon l'une quelconque des revendications 1 à 10.

14. Procédé pour la fabrication d'un panneau de matériau à base de bois selon la revendication 13, comprenant les étapes :
a) production de bois déchiqueté ou de copeaux de bois (OSB-strands) à base de bois appropriés,
b) hachage des fibres de bois du bois déchiqueté,
c) éventuellement stockage intermédiaire des copeaux de bois ou des fibres de bois, en particulier dans des silos ou des réservoirs,
d) séchage des copeaux de bois ou des fibres de bis,
e) triage ou tamisage des copeaux de bois ou des fibres de bois selon la taille des copeaux de bois ou des fibres de bois,
f) éventuellement nouvelle fragmentation des copeaux de bois ou des fibres de bois et stockage intermédiaire,
g) application des copeaux de bois ou des fibres de bois sur une bande transporteuse au moyen de séparation par flux d'air et/ou par projection, et
h) pressage des copeaux de bois ou des fibres de bois disposés sur la bande transporteuse,
**caractérisé en ce**
**qu'**on peut ajouter au moins composition de liant selon l'une quelconque des revendications 1 à 10 avant, pendant et/ou après l'une quelconque des étapes b) à h).
